# DEMANDE DE BREVET EUROPEEN

(11) **EP 2 860 660 A1**
(43) Date de publication de la demande: **15.04.2015**
(21) Numéro de dépôt: 13188308.4
(22) Date de dépôt: 11.10.2013
(51) Int. Cl.: G06F 21/71, G06F 21/72

(54) **Système et méthode de chargement sécurisé de données dans une mémoire cache associée à un processeur sécurisé**

(71) Demandeur: Nagravision S.A., 1033 Cheseaux-sur-Lausanne (CH)
(72) Inventeur: Fuchs, Pascal, 1005 Lausanne (CH); Gremaud, Fabien, 1618 Châtel-St-Denis (CH); Gogniat, Christophe, 1032 Romanel-sur-Lausanne (CH)
(74) Mandataire: Leman Consulting S.A.

(57) **Abrégé**

Un but de la présente invention est d'apporter une solution pour un processeur sécurisé intégré dans un système sur puce d'un tiers propriétaire permettant d'utiliser une mémoire non sécurisée de manière sécurisée. Le système comprend au moins un processeur hôte propre au système sur puce et des mémoires hôte associées au dit processeur hôte, au moins un processeur sécurisé propriétaire intégré dans ledit système sur puce et des mémoires sécurisées associées au dit processeur sécurisé, au moins une mémoire cache sécurisée contenant une pluralité de lignes de cache et comportant un contrôleur de cache sécurisé configuré pour charger lesdites lignes de cache depuis le processeur hôte vers le processeur sécurisé. Le système comprend de plus au moins une mémoire non sécurisée accessible par le processeur hôte et le processeur sécurisé. La mémoire cache stocke une table d'intégrité contenant des empreintes de chaque ligne de cache et un programme de vérification de l'intégrité de chaque ligne de cache lors de leur chargement par le processeur sécurisé à partir du processeur hôte et / ou de la mémoire non sécurisée. Une ligne de cache est validée après une comparaison réussie entre une empreinte de la ligne de cache calculée par le processeur sécurisé et une empreinte correspondante extraite de la table d'intégrité.

## Description

### Domaine de l'invention

La présente invention concerne le domaine de la sécurité de systèmes sur puce ou d'ordinateurs ou autres systèmes informatiques comprenant des processeurs, plus particulièrement, elle vise à garantir un chargement dans une mémoire volatile de travail sécurisée de données numériques ou d'applications à partir d'un environnement non sécurisé vers un environnement sécurisé.

### Arrière plan technique

Un système de traitement de données numériques comprend en général des composants matériels tels qu'un ou plusieurs processeurs, des mémoires volatiles RAM (Random Access Memory), des mémoires cache et des mémoires non-volatiles ROM à lecture seule (Read Only Memory). Le système de traitement de données fonctionne dans la plupart des cas sous le contrôle d'un système d'exploitation en exécutant des ensembles d'instructions de programme en utilisant une ou plusieurs ressources logicielles ou applications. Les applications peuvent être stockées dans une mémoire non-volatile et chargées dans une mémoire volatile lors de l'exécution si nécessaire. Lors de l'exécution d'une application, les données nécessaires à l'application ou les données produites par l'application peuvent être stockées dans la mémoire non volatile ou dans la mémoire volatile ou encore transférées d'une mémoire vers une autre.

Avec l'avènement d'options de connectivité multiples pour les systèmes de traitement de données, y compris la connectivité sans fil, et avec la forte croissance de l'utilisation de systèmes de traitement de données mobiles, la nécessité de protéger ces systèmes contre les attaques malveillantes devient de plus en plus importante. Ces attaques peuvent viser à interférer avec le démarrage du système, la modification du système d'exploitation, l'interception et / ou la modification de données produites ou utilisées par une application.

En effet, une protection des systèmes de traitement des données est devenue indispensable contre les manipulations frauduleuses et les attaques contre leur intégrité. Ces attaques malveillantes pourraient prendre la forme d'un logiciel conçu pour prendre en charge le système d'exploitation du système de traitement de données ou interférer d'une autre manière avec la séquence normale de traitement des données à l'insu de l'utilisateur ou de son approbation. Un tel logiciel est généralement connu comme logiciel malveillant auquel il est difficile de remédier afin de prévenir une défaillance complète du système de traitement ou des dommages irréparables.

Les logiciels malveillants se présentent par exemple sous la forme de virus informatiques, vers, chevaux de Troie, logiciels espion, etc. Ils peuvent attaquer le système de traitement de diverses manières telles que l'interception de données destinées à d'autres applications ou par la surveillance de frappes de touches de clavier afin de subtiliser des mots de passe ou d'autres informations sensées être gardées secrètes, la modification ou une altération de données ou la corruption de fichiers, la modification d'un programme afin de provoquer une panne ou exécuter une fonction non prévue initialement par l'utilisateur.

Les systèmes pour combattre ces attaques malveillantes existants utilisent généralement une unité de gestion de mémoire configurable par le processeur du système ou des processeurs sécurisés pourvu de modules de contrôle d'accès. A cause de la complexité croissante des processeurs, les fonctions de sécurité additionnelles qui seraient nécessaires pour minimiser les possibilités d'attaques malveillantes impliqueraient une hausse significative des coûts d'intégration sur puce pour implémenter ces fonctions et parallèlement une charge de calcul augmentée qui pourrait compromettre la vitesse de traitement des données Par conséquent, il serait souhaitable de disposer d'une solution efficace tant au point de vue coût et qu'à celui du volume de données occupé pour fournir à un processeur sécurisé des possibilités d'utiliser des mémoires non sécurisées de manière sécurisée.

Des solutions existent comme par exemple celle décrite par le document US5825878 où une unité intégrée de gestion de mémoire sécurisée est utilisée par un microprocesseur pour transférer des données et instructions encryptées à partir d'une mémoire externe. La sécurisation est réalisée par un contrôleur d'accès mémoire direct intégré sur la même puce que le microprocesseur. Les instructions et les commandes sont ainsi difficilement accessibles à un tiers malveillant depuis l'intérieur du microprocesseur où les données sont en clair. Par contre aucun moyen n'est disponible pour garantir que les données de la mémoire intégrée soient accessibles seulement par un processeur autorisé fonctionnant dans un mode particulier. Par conséquent, il est toujours possible pour un tiers malveillant de remplacer le contenu de la mémoire par un contenu illégal.

Le document US2003/037220A1 décrit une unité de gestion mémoire utilisant une méthode d'adressage par segments dans laquelle les données stockées comportent un descripteur de segments qui facilite le mappage d'adresses en éliminant un chargeur séparé sans toutefois résoudre les problèmes liés à la sécurité.

### Description sommaire de l'invention

Un but de la présente invention est d'apporter une solution pour un processeur sécurisé intégré dans un système sur puce d'un tiers propriétaire permettant d'utiliser une mémoire non sécurisée de manière sécurisée.

Ce but est atteint par un système de traitement de données numériques comprenant un système sur puce comprenant :
- au moins un processeur hôte propre au dit système sur puce et des mémoires hôte associées au dit processeur hôte,
- au moins un processeur sécurisé propriétaire intégré dans ledit système sur puce et des mémoires sécurisées associées au dit processeur sécurisé,
- au moins une mémoire cache sécurisée contenant une pluralité de lignes de cache et comportant un contrôleur de cache sécurisé configuré pour charger lesdites lignes de cache depuis le processeur hôte vers le processeur sécurisé,
le système comprend de plus au moins une mémoire non sécurisée accessible par le processeur hôte et le processeur sécurisé,
le système est **caractérisé en ce que** la mémoire cache stocke une table d'intégrité contenant des empreintes de chaque ligne de cache et un programme de vérification de l'intégrité de chaque ligne de cache lors du chargement par le processeur sécurisé desdites lignes de cache à partir du processeur hôte et / ou de la mémoire non sécurisée, une ligne de cache étant validée après une comparaison réussie entre une empreinte de la ligne de cache calculée par le processeur sécurisé et une empreinte correspondante extraite de la table d'intégrité.

L'invention concerne également une méthode de chargement de données dans une mémoire cache d'un système de traitement de données comprenant un système sur puce comprenant au moins un processeur hôte propre au dit système sur puce et des mémoires hôte associées au dit processeur hôte, au moins un processeur sécurisé propriétaire intégré dans ledit système sur puce et des mémoires sécurisées associées au dit processeur sécurisé, la méthode comprend les étapes suivantes :
dans une phase d'initialisation :
   - charger, par le processeur hôte, une application sécurisée dans une mémoire non sécurisée accessible par le processeur hôte et le processeur sécurisé,
   - transmettre au processeur sécurisé une signature et un fichier crypté d'une table d'intégrité configurée pour ladite application,
   - décrypter par le processeur sécurisé le fichier crypté de la table d'intégrité et la signature pour obtenir la table d'intégrité et son empreinte,
   - comparer l'empreinte de la table d'intégrité obtenue avec une empreinte calculée à partir du fichier décrypté,
   - lorsque la comparaison est réussie, charger et stocker, par le processeur sécurisé, la table d'intégrité dans la mémoire cache sécurisée, ladite table d'intégrité comprenant des empreintes associées à l'application,
dans une phase d'exécution de l'application par le processeur sécurisé:
   - charger et stocker l'application en formant des lignes de cache dans la mémoire cache,
   - vérifier l'intégrité de chaque ligne de cache de l'application en comparant une empreinte calculée par le processeur sécurisé à partir de chaque ligne de cache avec une empreinte correspondante extraite de la table d'intégrité associée à ladite l'application,
   - exécuter l'application dans la mémoire cache seulement lorsque la vérification de chaque ligne de cache de l'application est réussie.

Une mémoire cache ou antémémoire consiste en une mémoire qui enregistre temporairement des données provenant d'une autre source de données afin de diminuer le temps d'accès (en lecture ou en écriture) d'un processeur à celles-ci. La mémoire cache est plus rapide et plus proche du processeur qui traite les données, mais en général plus petite qu'une mémoire source externe pour laquelle elle sert d'intermédiaire. Cette mémoire source en général non sécurisée peut être constituée d'une mémoire du type flash, d'un disque dur, d'une mémoire distante sur un réseau ou nuage informatique (cloud) ou tout autre type de mémoire à accès en lecture seule ou en lecture et écriture. La mémoire cache est souvent plus coûteuse qu'une mémoire conventionnelle car elle est conçue selon une technologie plus sophistiquée afin d'être la plus rapide possible souvent au détriment de sa taille.

Les applications sécurisées sont divisées en blocs constitués par les lignes de cache qui sont chargées de manière sécurisée par le contrôleur de cache sécurisé. De plus, le processeur sécurisé utilise une configuration de la correspondance ou mappage de la mémoire avec des modes d'accès aux données stockées : à lecture écriture, lecture seule, exécutable, ou désactivées préalablement stockée dans la mémoire cache.

Le système de traitement de l'invention utilise aussi bien des ressources matérielles que logicielles. La table d'intégrité contient des empreintes de chaque ligne de cache de l'application chargée dans la mémoire. Ces empreintes sont obtenues en général par l'application d'une fonction de hachage unidirectionnelle et sans collision sur les données chargées dans la mémoire cache sous la forme d'une pluralité de lignes de cache.

Lorsqu'une ligne de cache est chargée à partir d'un environnement non sécurisé, son intégrité est vérifiée grâce à la table d'intégrité préalablement stockée. Une ligne de cache est validée seulement après une vérification réussie de son intégrité, c'est-à-dire lorsque son empreinte calculée est identique à l'empreinte correspondante tirée de la table,

La table d'intégrité est configurée par le processeur sécurisé qui charge les empreintes des données à stocker ou entrées dont le mode d'accès est exécutable et à lecture seule tandis que pour des entrées à lecture et écriture les empreintes sont calculées lors de leur réécriture. Selon une variante, l'algorithme et/ou la clé utilisée pour l'authentification des entrées varient selon le mode d'accès des entrées. Par exemple, les entrées à lecture et écriture sont vérifiées en utilisant un secret volatile tandis que les autres entrées utilisent une authentification à paramètres préenregistrés.

La table d'intégrité associée aux entrées à lecture seule et exécutables et le mappage de la mémoire sont chargés de préférence après une authentification forte basée par exemple sur un algorithme cryptographique à clés asymétriques.

Lorsque le processeur essaie d'accéder une donnée qui n'est pas chargée dans le cache, il se produit un défaut de cache (cache miss). Le traitement des instructions est suspendu en attendant le transfert des données vers la mémoire cache. Dans le cas d'un défaut de cache, le contrôleur de cache charge une ligne de cache à partir de l'environnement non sécurisé tout en calculant l'intégrité des données chargées. Durant cette opération, la ligne de cache reste inaccessible par le processeur sécurisé. Le contrôleur de cache compare ensuite les données chargées avec une entrée correspondante de la table d'intégrité, en l'occurrence, il vérifie l'empreinte de la ligne de cache, le mode d'accès et l'adresse. Lorsque la vérification est réussie, la ligne de cache chargée devient accessible au processeur sécurisé selon le mode d'accès approprié.

Selon une variante, les données non sécurisées sont chargées par le processeur sécurisé et le contrôleur de cache de manière à ajouter à ces données un chiffrement basé sur un secret volatile.

Un avantage de la méthode est de fournir une authentification forte, c'est-à-dire qu'aucun code de programme n'est chargé à partir d'un environnement non sécurisé vers un environnement sécurisé et exécuté sans vérification.

Une certaine flexibilité d'implémentation d'application sans se préoccuper de la capacité mémoire représente aussi un avantage

Un autre avantage consiste en une adaptabilité des ressources mémoires de manière à optimiser les coûts est aussi possible parfois au détriment des performances comme la vitesse de traitement tout en conservant un niveau de sécurité acceptable.

### Brève description des figures

L'invention sera mieux comprise grâce à la description détaillée qui va suivre en se référant aux figures annexées qui sont données à titre d'exemples nullement limitatifs, à savoir:
La figure 1 montre un schéma bloc du système de l'invention utilisant une table d'intégrité pour vérifier les données chargées dans une mémoire cache sécurisé à partir d'un environnement non sécurisé.
La figure 2 montre une variante de la méthode de l'invention permettant de diminuer la taille de la table d'intégrité en calculant une empreinte sur plusieurs blocs à la fois.

### Description détaillée de l'invention

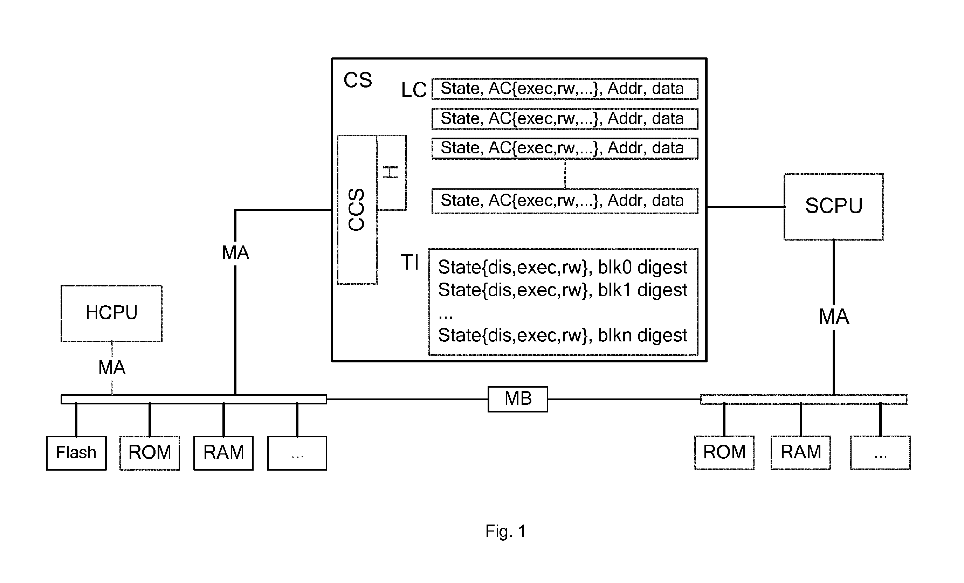

Le système sur puce de l'invention illustré par le schéma bloc de la figure 1 comprend un processeur hôte HCPU et un processeur sécurisé SCPU relié chacun par une connexion du type réseau MA à différent types de mémoires telles que Flash (mémoire à accès aléatoire non volatile), ROM (mémoire à lecture seule, RAM (mémoire volatile à accès aléatoire), disques durs, disques optiques etc. Le processeur sécurisé SCPU est en général personnalisé ou propriétaire tandis que le processeur hôte HCPU standard est développé par un tiers comme le système sur puce dans lequel est implanté le processeur sécurisé SCPU. Une mémoire cache sécurisée CS permet de charger des données à traiter à partir du processeur hôte vers le processeur sécurisé SCPU. Un contrôleur de cache CCS associé à la mémoire cache CS sécurisée gère le transfert des données vers le processeur sécurisé SCPU en effectuant des vérifications systématiques de chaque ligne de cache ou blocs de données dans la mémoire cache CS. Les données destinées à être chargées dans la mémoire cache CS sont stockées dans une ou plusieurs mémoires non sécurisées accessibles au processeur hôte HCPU et au processeur sécurisé SCPU.

Une interface particulière MB appelé aussi boîte à lettre permet aux deux processeurs d'échanger des messages ou des instructions.

Une table d'intégrité TI contenant des empreintes de chaque ligne de cache est stockée dans la mémoire cache CS. Lors d'un chargement qu'une ligne de cache dans la mémoire cache CS, le contrôleur de cache CCS calcule l'empreinte de cette ligne de cache à l'aide d'une fonction de hachage H et compare cette empreinte calculée avec l'empreinte correspondante extraite de la table d'intégrité TI. Lorsque la comparaison est réussie, c'est-à-dire lorsque l'empreinte calculée est identique à l'empreinte correspondante extraite de la table d'intégrité TI, la ligne de cache est considérée comme valide par le processeur sécurisé SCPU. En cas d'échec de la comparaison, la vérification peut être répétée un certain nombre de fois et si des erreurs persistent malgré tout, le processeur sécurisé bloque le chargement des données dans la mémoire cache CS.

Une ligne de cache comprend au moins un paramètre d'état (State), une condition d'accès AC, une adresse (Addr) à laquelle la ligne de cache est stockée, et des données (data). Les conditions d'accès AC définissent un mode selon lequel le processeur accède aux données (data) qui peuvent être traitées soit en mode exécutable (exec) comme une instruction, soit en mode lecture seule (ro), soit en mode lecture écriture (rw). Ainsi le programme de vérification calcule une empreinte sur tout ou partie d'un bloc blkn [State, AC {exec, ro, rw}, addr, data]. Par exemple, les empreintes (blkn digest) de la table d'intégrité TI et les empreintes correspondantes qui sont calculées par le programme de vérification peuvent être déterminées à partir des données (data) seulement, ou à partir des données (data) et des adresses (addr), ou à partir du bloc dans son ensemble.

La vérification de l'intégrité peut s'effectuer soit « ä la volée » bloc par bloc ou ligne par ligne pendant le chargement dans la mémoire cache CS, soit après le chargement d'une ligne de cache lorsqu'elle est stockée.

Le système selon l'invention comprend également un dispositif permettant d'effectuer un mappage de la mémoire cache où un bloc de données ou une ligne de cache est accédée par le processeur sécurisé en utilisant une adresse virtuelle pointant vers une adresse physique à laquelle le bloc de donnée ou la ligne de cache est stockée dans la mémoire cache, l'adresse physique étant différente de l'adresse virtuelle. La ligne de cache comprend alors l'adresse virtuelle à la place de l'adresse physique. Lorsque les données sont chargées dans la mémoire cache dans une zone disponible de la mémoire, le mappage est mis à jour afin de représenter un lien entre l'adresse virtuelle et l'adresse physique à laquelle les données sont stockées. Selon une variante, ce mappage peut varier entre des chargements successifs de la mémoire cache CS.

En cas de défaut de cache, le traitement des données est suspendu en attendant le transfert des données vers la mémoire cache. Le contrôleur de cache charge une ligne de cache à partir de l'environnement non sécurisé tout en vérifiant « à la volée » l'intégrité des données en cours de chargement. Les conditions d'accès et les adresses sont également vérifiées sur la base du mappage préenregistré de la mémoire.

Selon la méthode de l'invention, le processeur hôte HCPU charge une application sécurisée dans une mémoire non sécurisée MP accessible à la fois par le processeur hôte HCPU et le processeur sécurisé SCPU. Dans une phase d'initialisation, le processeur hôte HCPU transmet au processeur sécurisé SCPU via l'interface MB par exemple une signature Sig de la table d'intégrité TI formée par une empreinte de celle-ci encryptée avec une clé connue du processeur sécurisé et un fichier crypté de cette table d'intégrité TI associée à l'application. Le fichier peut être encrypté avec la même clé que l'empreinte de la table d'intégrité de la signature ou avec une clé différente, également connue du processeur sécurisé SCPU, qui peut être dérivée de celle de la signature.

Le processeur sécurisé SCPU décrypte le fichier et la signature pour obtenir la table d'intégrité TI et son empreinte puis calcule une empreinte de la table d'intégrité pour la comparer avec l'empreinte obtenue par la décryption de la signature. La table d'intégrité est chargée et stockée dans la mémoire cache sécurisée seulement si la comparaison donne un résultat montrant que les deux empreintes sont identiques. Dans le cas contraire, la table d'intégrité nécessaire à la vérification de l'application ne peut pas être chargée et la phase d'initialisation s'arrête dans l'attente d'une autre tentative de chargement de la table d'intégrité.

Dans une phase d'exécution de l'application par le processeur sécurisé, l'application est chargée et stockée dans la mémoire cache en formant une pluralité de lignes de cache. Chacune de ces lignes de cache est vérifiée en comparant une empreinte calculée à partir de chaque ligne avec une empreinte correspondante extraite de la table d'intégrité associée à l'application.

L'application n'est exécutée que si la vérification de chaque ligne de cache est réussie.

Selon une variante, les données stockées dans la mémoire non sécurisée destinées à être chargées dans la mémoire cache sont encryptées. Dans ce cas, elles comprennent un ou des blocs supplémentaires que le processeur sécurisé peut identifier comme porteurs d'une clé permettant de décrypter ces données avant leur chargement dans la mémoire cache.

Selon une autre variante, les données non sécurisées sont chargées par le processeur sécurisé et le contrôleur de cache de manière à ajouter à ces données un chiffrement basé sur un secret volatile, le chiffrement étant effectué après une vérification réussie de l'intégrité des lignes de cache.

Le secret volatile peut consister en une clé de chiffrement basée sur un nombre aléatoire généré par le contrôleur de cache lors de la phase d'initialisation du système de manière à générer une nouvelle clé à chaque enclenchement du système. La clé de chiffrement peut être stockée dans une mémoire accessible par le processeur sécurisé et le paramètre d'état (state) des lignes de cache peut indiquer le chiffrement des données et une référence permettant de retrouver la clé de chiffrement.

Selon une option, la clé de chiffrement peut être une fonction de l'adresse mémoire physique à laquelle la ligne de cache est stockée. Par exemple, la clé peut être calculée en appliquant une fonction à sens unique sur l'adresse mémoire.

Afin de réduire la taille mémoire nécessaire, il est préférable de diminuer le plus possible la taille de la table d'intégrité. Une solution serait de diminuer la taille de cette table en augmentant le nombre de blocs à charger en une fois dans la mémoire cache en disposant d'une empreinte calculée sur un plus grand nombre de blocs, mais lorsque ce nombre de blocs chargés en une fois devient trop élevé, les performances peuvent se dégrader, notamment en cas de défaut de cache.

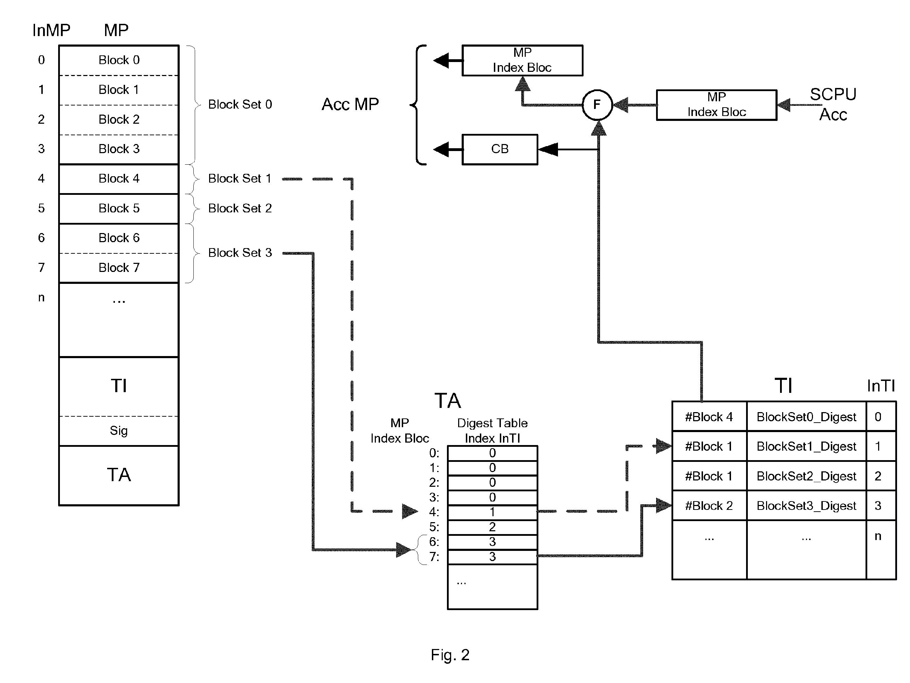

Selon une variante, la table d'intégrité TI associée à une application ou un programme à charger est générée de manière à inclure un nombre de blocs de cache à charger qui dépend de contraintes relative au matériel du système et des caractéristiques d'exécution du programme. Une empreinte est calculée sur un bloc ou sur plusieurs blocs qui définissent des ensembles de blocs. Ces ensembles de blocs multiples sont de préférences contigus, c'est-à-dire que l'empreinte est calculée en suivant un index dans un ordre croissant, et composés de 2ⁿ blocs alignés. Par exemple, des ensembles de 4 blocs sont alignés à une adresse mémoire prédéfinie. La table d'intégrité TI comprend ainsi une colonne contenant un index InTI désignant chaque ensemble de blocs en sus des empreintes calculées sur chaque ensemble (BlockSetn_Digest) et une colonne contenant un nombre de blocs (#Block) dans chaque ensemble de blocs. Dans l'exemple de la figure 2, la table TI indique un nombre de blocs (#Block) égale à 4 pour l'ensemble de blocs BlockSet0 ayant une empreinte BlockSet0_Digest.

Afin d'établir un lien entre un index InMP d'un bloc de la mémoire principale MP non sécurisée et un index InTI d'une empreinte (BlockSetn_Digest) dans la table d'intégrité, une table d'association TA est générée en sus de la table d'intégrité TI. Cette table d'association TA devient utile surtout en cas de défaut de cache.

Lors de la phase d'initialisation, la table d'intégrité TI et la table d'association TA sont transmises à partir de la mémoire principale non sécurisée MP vers le processeur sécurisé en effectuant une authentification forte basée par exemple sur un algorithme cryptographique à clés asymétriques.

Selon une option, le nombre de blocs (#Block) de chaque ensemble est initialisé une fois pour toute pour une application entière ou un programme entier. Dans ce cas, la colonne de la table d'intégrité TI contenant le nombre de blocs (#Block) de l'ensemble de blocs est remplacée par une constante correspondant au nombre de blocs de tous les ensembles de blocs de l'application, ce qui a comme avantage de réduire la taille de la table d'intégrité TI.

En cas de défaut de cache, le contrôleur de cache CCS charge dans la mémoire cache sécurisée CS un bloc ou un ensemble de blocs associés à des index InMP définis dans la mémoire principale non sécurisée MP. Le nombre de blocs d'un ensemble de blocs à charger est obtenu à partir de l'index InMP du bloc de la mémoire principale MP en utilisant la table d'association TA et la table d'intégrité TI.

La figure 2 montre un exemple du mécanisme d'authentification de blocs dans une mémoire non sécurisée MP avant leur chargement dans la mémoire cache sécurisée CS..

Par exemple, un premier ensemble de blocs (Block Set 1) comprend un bloc d'index 4. La table d'association TA permet de déterminer un index InTI de blocs de la table d'intégrité TI correspondant à l'ensemble (Block Set 1). Cet index InTI égale 1 permet de déterminer l'empreinte (BlockSet1_Digest) de l'ensemble (Block Set 1). Dans ce cas, comme l'ensemble contient qu'un seul bloc, le bloc est chargé par contrôleur de cache CCS comme pour une mémoire cache standard.

Dans le cas où un ensemble de blocs contient plusieurs blocs, un compteur de blocs CB est chargé avec la valeur du nombre de blocs (#Block n) et l'adresse du début de l'ensemble de blocs est calculée pour permettre ainsi au contrôleur de cache CCS de charger la totalité de l'ensemble de blocs. L'index InMP des blocs dans la mémoire MP est incrémenté afin de déterminer l'empreinte de chaque ensemble de blocs suivant dans l'ordre croissant des index InMP dans la table d'intégrité TI en passant par la table d'association TA.

L'ensemble de blocs (BlockSet 3) comprend 2 blocs d'index InMP 6 et 7, la table d'association TA indique un index InTI égale à 3 pour les index des blocs 6 et 7. Dans ce cas l'empreinte (BlockSet3_Digest) est déterminée sur deux blocs consécutifs de la mémoire MP.

Le contrôleur de cache CCS calcule séquentiellement une empreinte pour chaque ensemble de blocs (Block Set n) extrait de la mémoire principale non sécurisée MP et compare cette empreinte calculée avec l'empreinte correspondante tirée de la table d'intégrité TI avant d'autoriser l'accès.

La table d'association TA sert à déterminer un index InTI et accessoirement le nombre de blocs (#Block) dans un ensemble de blocs à partir des index InMP de la mémoire MP ayant un même index InTI dans la table d'association TA. Dans l'exemple de la figure 2, les blocs d'index InMP 6 et 7 dans la mémoire MP ont un même index InTI de 3 dans la table TA, ce qui signifie que l'ensemble (Block Set 3) comprend deux blocs (#Block = 2) et que l'empreinte (Block Set 3_Digest) est déterminée sur deux blocs à la fois.

## Revendications

1. Système de traitement de données numériques comprenant un système sur puce comprenant :
- au moins un processeur hôte propre au dit système sur puce et des mémoires hôte associées au dit processeur hôte,
- au moins un processeur sécurisé propriétaire intégré dans ledit système sur puce et des mémoires sécurisées associées au dit processeur sécurisé,
- au moins une mémoire cache sécurisée contenant une pluralité de lignes de cache et comportant un contrôleur de cache sécurisé configuré pour charger lesdites lignes de cache depuis le processeur hôte vers le processeur sécurisé,
le système comprend de plus au moins une mémoire non sécurisée accessible par le processeur hôte et le processeur sécurisé,
le système est **caractérisé en ce que** la mémoire cache stocke une table d'intégrité contenant des empreintes de chaque ligne de cache et un programme de vérification de l'intégrité de chaque ligne de cache lors du chargement par le processeur sécurisé desdites lignes de cache à partir du processeur hôte et / ou de la mémoire non sécurisée, une ligne de cache étant validée après une comparaison réussie entre une empreinte de la ligne de cache calculée par le processeur sécurisé et une empreinte correspondante extraite de la table d'intégrité.

2. Système selon la revendication 1, **caractérisé en ce que** les empreintes sont obtenues par l'application d'une fonction de hachage unidirectionnelle et sans collision sur tout ou partie des données chargées de chaque ligne de cache.

3. Système selon la revendication 1 ou 2, **caractérisé en ce qu'**une ligne de cache comprend au moins un paramètre d'état, une condition d'accès, une adresse à laquelle la ligne de cache est stockée, et des données, la condition d'accès définissant un mode selon lequel le processeur accède aux données comprenant un mode exécutable, un mode en lecture seule, ou un mode en lecture écriture.

4. Système selon la revendication 3, **caractérisé en ce qu'**une empreinte de la table d'intégrité et l'empreinte correspondante calculée par le programme de vérification de l'intégrité sont déterminées à partir des données seulement de la ligne de cache, ou à partir des données et de l'adresse ou à partir de la ligne de cache dans son ensemble.

5. Système selon l'une quelconque des revendications 1 à 4, **caractérisé en ce qu'il** comprend un dispositif de mappage de la mémoire cache définissant une adresse virtuelle pointant vers une adresse physique à laquelle une ligne de cache est stockée dans la mémoire cache, ladite ligne de cache étant accédée par le processeur sécurisé en utilisant l'adresse virtuelle différente de l'adresse physique.

6. Système selon l'une quelconque des revendications 1 à 5, **caractérisé en ce que** les données stockées dans la mémoire non sécurisée destinées à être chargées dans la mémoire cache sont encryptées, lesdites données comprenant un ou des blocs supplémentaires comportant une clé pour décrypter ces données avant leur chargement dans la mémoire cache.

7. Système selon l'une quelconque des revendications 1 à 6, **caractérisé en ce que** les données non sécurisées sont chargées par le processeur sécurisé et le contrôleur de cache de manière à ajouter à ces données un chiffrement basé sur un secret volatile, le chiffrement étant effectué après une vérification réussie de l'intégrité des lignes de cache.

8. Système selon la revendication 7, **caractérisé en ce que** le secret volatile comprend une clé de chiffrement basée sur un nombre aléatoire généré par le contrôleur de cache lors de la phase d'initialisation du système, ladite clé de chiffrement étant stockée dans une mémoire accessible par le processeur sécurisé et le paramètre d'état des lignes de cache indiquant le chiffrement des données et une référence de la clé de chiffrement.

9. Système selon la revendication 8, **caractérisé en ce que** la clé de chiffrement dépend de l'adresse mémoire physique à laquelle la ligne de cache est stockée.

10. Système selon l'une quelconque des revendications 1 à 9, **caractérisé en ce que** la table d'intégrité comprend des empreintes calculées sur un bloc de données ou sur une pluralité de blocs définissant des ensembles de blocs désignés chacun par un index de blocs, ledit index de blocs étant défini dans une table d'association établissant un lien entre des index de chaque bloc stocké dans la mémoire non sécurisée et les index de blocs associés à chaque empreinte de la table d'intégrité.

11. Méthode de chargement de données dans une mémoire cache d'un système de traitement de données comprenant un système sur puce comprenant au moins un processeur hôte propre au dit système sur puce et des mémoires hôte associées au dit processeur hôte, au moins un processeur sécurisé propriétaire intégré dans ledit système sur puce et des mémoires sécurisées associées au dit processeur sécurisé, la méthode comprend les étapes suivantes :
dans une phase d'initialisation :
- charger, par le processeur hôte, une application sécurisée dans une mémoire non sécurisée accessible par le processeur hôte et le processeur sécurisé,
- transmettre au processeur sécurisé une signature et un fichier crypté d'une table d'intégrité configurée pour ladite application,
- décrypter par le processeur sécurisé le fichier crypté de la table d'intégrité et la signature pour obtenir la table d'intégrité et son empreinte,
- comparer l'empreinte de la table d'intégrité obtenue avec une empreinte calculée à partir du fichier décrypté,
- lorsque la comparaison est réussie, charger et stocker, par le processeur sécurisé, la table d'intégrité dans la mémoire cache sécurisée, ladite table d'intégrité comprenant des empreintes associées à l'application,
dans une phase d'exécution de l'application par le processeur sécurisé:
- charger et stocker l'application en formant des lignes de cache dans la mémoire cache,
- vérifier l'intégrité de chaque ligne de cache de l'application en comparant une empreinte calculée par le processeur sécurisé à partir de chaque ligne de cache avec une empreinte correspondante extraite de la table d'intégrité associée à ladite l'application,
- exécuter l'application dans la mémoire cache seulement lorsque la vérification de chaque ligne de cache de l'application est réussie.

12. Méthode selon la revendication 11, **caractérisée en ce que** les empreintes sont obtenues par l'application d'une fonction de hachage unidirectionnelle et sans collision sur tout ou partie des données chargées de chaque ligne de cache.

13. Méthode selon la revendication 11 ou 12, **caractérisée en ce qu'**une ligne de cache comprend au moins un paramètre d'état, une condition d'accès, une adresse à laquelle la ligne de cache est stockée, et des données, la condition d'accès définissant un mode selon lequel le processeur accède aux données comprenant un mode exécutable, un mode en lecture seule, ou un mode en lecture écriture.

14. Méthode selon la revendication 13, **caractérisée en ce qu'**une empreinte de la table d'intégrité et l'empreinte correspondante calculée par le programme de vérification de l'intégrité sont déterminées à partir des données seulement de la ligne de cache, ou à partir des données et de l'adresse ou à partir de la ligne de cache dans son ensemble.
